# EUROPÄISCHE PATENTSCHRIFT

(11) **EP 0 943 812 B1**
(45) Veröffentlichungstag und Bekanntmachung des Hinweises auf die Patenterteilung: **01.09.2004**
(21) Anmeldenummer: 99890052.6
(22) Anmeldetag: 10.02.1999
(51) Int. Cl.: F15B 5/00, F16K 31/00

(54) **Piezoelektrisches Ventil**
Piezoelectric valve
Electrovanne à effet piézo-électrique

(30) Priorität: 18.03.1998 AT 47498
(43) Veröffentlichungstag der Anmeldung: 22.09.1999
(73) Patentinhaber: HYGRAMA AG, 6304 Zug (CH)
(72) Erfinder: Frisch, Herbert, 86972 Altenstadt (DE); Wirtl, Johannes, 86956 Schongau (DE); Strasser, Günther, 82401 Rottenbuch (DE)
(74) Vertreter: Pinter, Rudolf, Dipl.-Ing.

(56) Entgegenhaltungen:
- EP-A- 0 128 447
- EP-A- 0 538 236
- DE-U- 8 607 094
- DE-U- 29 514 495
- DE-U- 29 718 306
- GB-A- 2 134 223

## Beschreibung

Die Erfindung betrifft ein piezoelektrisches Ventil, mit einem im wesentlichen einstückigen Gehäuse, wenigstens einem im Innenraum des Gehäuses angeordneten steuerbaren Dichtsitz und einem von einer Seite her abgedichtet ins Gehäuse eingeschobenen und einseitig im Gehäuse gehaltenen piezoelektrischen Biegeelement, dessen freie Seite den Dichtsitz entsprechend einer angelegten Steuerspannung verschließt oder freigibt.

Aus der EP-A1 0 191 011 ist ein piezokeramischer Biegewandler bekannt, bei dem das Biegeelement so in ein Gehäuse eingebaut ist, daß es an einem Ende an drei Punkten zur Auflage kommt, von denen einer verstellbar ist und gleichzeitig zur Kontaktierung der Mittelelektrode dient. Das Biegeelement selbst ist fest mit einer separaten Lenkerfeder verbunden, die ihrerseits mit dem Gehäuse verbunden ist und gleichzeitig zur Anpressung des Biegeelementes an die Auflagepunkte dient. Mit dem freien Ende des Biegeelementes kann entsprechend der angelegten Steuerspannung wechselweise eine Zu- bzw. Abluftdüse verschlossen oder freigegeben werden. Die elektrischen Kontakte für das piezoelektrische Biegeelement sind aus dem Gehäuse herausgeführt und abgedichtet.

Da die Elektroden des Biegeelementes und die im Inneren des Gehäuses liegenden Kontaktteile nicht geschützt bzw. isoliert und direkt dem strömenden Medium ausgesetzt sind, ist ein Betrieb dieser bekannten Anordnung mit elektrisch leitenden Flüssigkeiten nicht möglich. Bei Kondensatbildung im Inneren des Gehäuses besteht Kurzschlußgefahr; an den Kontaktierungsstellen Korrosionsgefahr. Da die Kontaktierungsstellen im Innenraum des Gehäuses nicht getrennt vom Arbeitsraum sind, müssen die elektrischen Anschlußkontakte gasdicht aus dem Gehäuse herausgeführt werden. Die Abdichtung zwischen dem Biegeelement und den zu steuernden Öffnungen bzw. Düsen erfordert hochwertige Oberflächen und exakte Lagen zueinander, um möglichst geringe Lekagewerte zu erreichen. Aus all den beschriebenen Umständen ergibt sich ein relativ aufwendiger und teurer Herstellungsprozeß sowie der zusätzliche Nachteil, daß das Gehäuse nach dem Zusammenbau durch Verkleben nur mehr zerstörend geöffnet werden kann, sodaß beispielsweise die relativ teuren Biegeelemente nach einem Montage- bzw. Justierungsfehler nicht mehr entnommen und weiterverwendet werden können.

Ein ähnlich wie oben beschrieben aufgebauter Biegewandler ist beispielsweise weiters aus der DE 44 10 153 C1 bekannt, wobei dort schon vorgeschlagen wird, eine isolierende Deckschicht auf dem Biegeelement anzubringen. Dies ermöglicht zwar auch die Steuerung agressiver oder elektrisch leitender Flüssigkeiten, jedoch bleiben auch hier die sonstigen beschriebenen Nachteile im wesentlichen erhalten.

Schließlich ist beispielsweise aus der WO 97/09555 ein piezoelektrisches Ventil der eingangs genannten Art bekannt, bei welchem das im wesentlichen einstückige Gehäuse eine seitliche Öffnung für das Einsetzen des Biegeelementes aufweist, welche zum Abschluß der Montage mit einer Vergußmasse bleibend vergossen wird. Es ist damit zwar eine relativ einfache Abdichtung des Innenraumes des Gehäuses mit gleichzeitiger Festlegung bzw. Einspannung des Biegeelementes auf einer Seite möglich, jedoch kann eine Demontage wiederum nur zerstörend erfolgen. Weiters ist auch hier keine Isolierung des Biegeelementes selbst vorgesehen, sodaß der Anwendung dieses Ventils wieder die eingangs beschriebenen Grenzen gesetzt sind.

Aufgabe der vorliegenden Erfindung ist es, ein piezoelektrisches Ventil der eingangs genannten Art so zu verbessern, daß die beschriebenen Nachteile von bekannten, gleichen oder ähnlichen Ventilen vermieden werden und daß insbesonders auf einfache und kostengünstige Weise eine Steuerung verschiedenster Medien erfolgen kann und beispielsweise bei Montage- oder Justierfehlern das gesamte Ventil auch wieder zerstörungsfrei zerlegt und zumindest Einzelteile davon weiterverwendet werden können.

Diese Aufgabe wird bei einem piezoelektrischen Ventil der eingangs genannten Art dadurch gelöst, daß das piezoelektrische Biegeelement zumindest in dem im Innenraum des Gehäuses gelegenen Bereich mit einem Überzug aus zumindest teilweise elastischem Isoliermaterial versehen ist, welcher auf der gehaltenen Seite gleichzeitig auch den Innenraum des Gehäuses nach außen abdichtet. Der an sich beispielsweise im Zusammenhang mit der eingangs angesprochenen DE 44 10 153 C1 bekannte isolierende Überzug des Biegeelementes dient hier also gleichzeitig zur Abdichtung des Innenraumes des Gehäuses nach außen, welches damit weder verklebt noch sonstwie großflächig abgedichtet werden muß. Das Biegeelement mit Überzug und Dichtung für die seitliche Einschuböffnung des Gehäuses kann damit einfach auch nach der Montage und Justierung noch aus dem Gehäuse gezogen werden, sodaß beispielsweise das Biegeelement selbst ohne weiteres wiederverwendet werden kann.

In bevorzugter Ausgestaltung der Erfindung ist vorgesehen, daß der Überzug auf der gehaltenen Seite des Biegeelements einen vorzugsweise einstückig angeformten, sich im wesentlichen senkrecht zur Längserstreckung des Biegeelementes um dieses erstreckenden Dichtwulst aufweist, der im montierten Zustand des Ventils zwischen dem Gehäuse und einem von außen mit dem einseitig gehaltenen Biegeelement samt Überzug einschiebbaren Klemmschuh festgeklemmt ist. Es ergibt sich auf diese Weise eine sehr einfache Ausbildung des Überzuges bzw. der Abdichtung der Einschuböffnung am Gehäuse durch den am Überzug angeformten Dichtwulst, der zwischen Gehäuse und Klemmschuh die erforderliche Abdichtung des Innenraumes des Gehäuses nach außen bewerkstelligt.

Der Klemmschuh kann in bevorzugter weiterer Ausgestaltung der Erfindung auch zumindest Teile der elektrischen Kontaktierung des Biegeelementes aufweisen, welche damit ebenso beim Einschieben des Biegeelementes in die seitliche Gehäuseöffnung in die für die elektrische Kontaktierung erforderlichen Positionen kommen.

Am Klemmschuh kann nach einer anderen bevorzugten Weiterbildung der Erfindung eine im montierten Zustand des Ventils am Gehäuse einrastende, von außen bedarfsweise entriegelbare Rastnase vorgesehen sein, was Montage und gegebenenfalls Demontage des Ventils sehr vereinfacht und die relative Lage der montierten Elemente bzw. Baugruppen zueinander einfach und reproduzierbar festlegt. Abgesehen von der beschriebenen Ausgestaltung könnte natürlich aber die Rastnase in entsprechender Ausgestaltung auch am Gehäuse vorgesehen sein und dann am Klemmschuh einrasten.

Der Überzug besteht in bevorzugter Ausgestaltung der Erfindung aus dünnwandigem, vorzugsweise im Bereich des Dichtwulstes und/oder des Dichtsitzes verstärktem, Elastomer. Durch die Dünnwandigkeit werden vor allem im Düsenbereich Effekte durch die thermische Längenausdehnung und Quellung gering gehalten, wobei zusätzlich noch von Vorteil ist, daß die mechanische Bewegungsfreiheit des Biegeelementes nur unwesentlich beeinträchtigt wird.

Die Länge des Überzuges ist in weiterer vorteilhafter Ausgestaltung der Erfindung im nicht montierten Zustand geringfügig kleiner als die im montierten Zustand damit überzogene Länge des Biegeelementes, womit durch die Dehnung bei der Montage ein gutes Aufliegen des Überzuges auf dem Biegeelement sichergestellt wird.

Der Innenraum des Überzuges ist in weiterer bevorzugter Ausgestaltung der Erfindung über die Oberflächenrauhigkeit des Biegeelementes, und/oder über zusätzliche Ausnehmungen, Nuten, Kanäle oder dergleichen des Biegeelementes, sowie durch den Klemmschuh in die Umgebung entlüftet, womit eine zusätzliche Anpressung des Überzuges an die Oberfläche des Biegeelementes abhängig vom Betriebsdruck erreicht und ein Abheben vor allem im Düsenbereich verhindert wird.

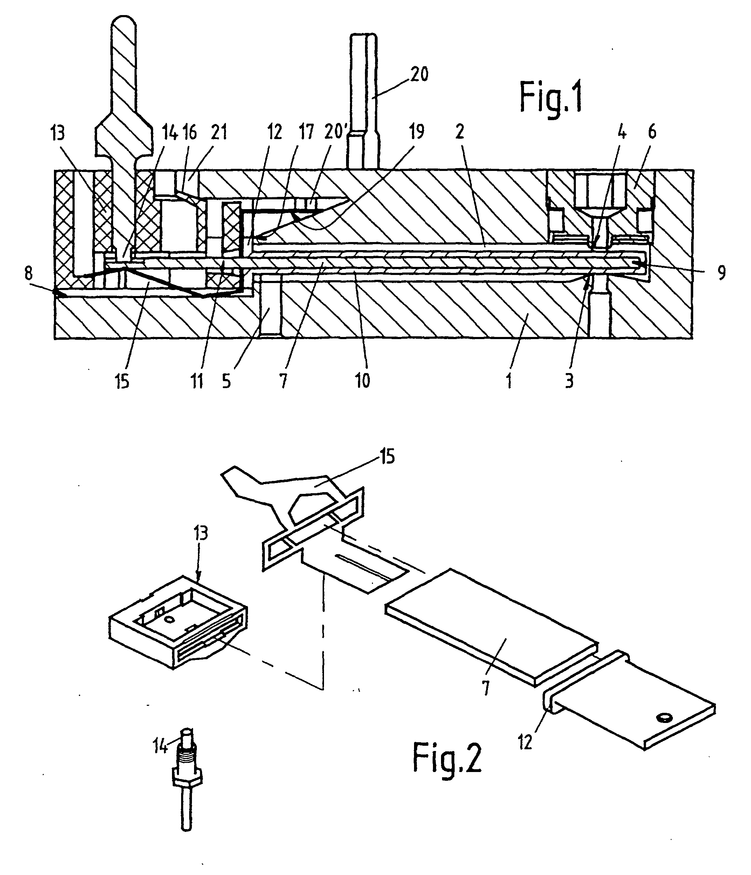

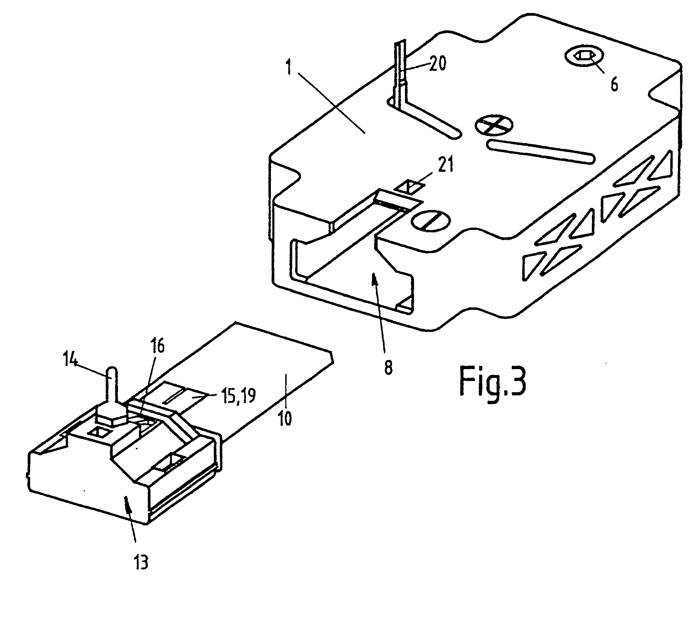

Die Erfindung wird im folgenden noch anhand der in der Zeichnung teilweise schematisch dargestellten Ausführungsbeispiele näher erläutert. Fig. 1 zeigt dabei einen Längsschnitt durch ein erfindungsgemäß ausgebildetes piezoelektrisches Ventil und Fig. 2 und 3 zeigen in perspektivischer Explosionsdarstellung zwei Teilschritte bei der Montage des Ventils gemäß Fig. 1.

Das dargestellte piezoelektrische Ventil weist ein im wesentlichen einstückiges Gehäuse 1 auf, welches hier zufolge der Funktion des Ventiles als elektrisch-pneumatischer Biegewandler zwei im Innenraum 2 gegenüberliegend angeordnete steuerbare Dichtsitze 3, 4 sowie einen ebenfalls in den Innenraum 2 mündenden Signalausgang 5 trägt. Der Dichtsitz 3 steuert hier die Zuluft und der Dichtsitz 4, welcher in einem Schraubteil 6 ausgebildet und damit einstellbar ist, die Abluft.

Von der in der Darstellung nach Fig. 1 linken Seite her ist ein piezoelektrisches Biegeelement 7 abgedichtet in eine seitliche Öffnung 8 (siehe auch Fig. 3) des Gehäuses 1 eingeschoben und auf dieser Seite einseitig im Gehäuse 1 gehalten. Die freie, rechte Seite des Biegeelementes 7 ist zwischen den Dichtsitzen 3, 4 entsprechend einer angelegten Steuerspannung bewegbar, womit diese Dichtsitze verschlossen oder freigegeben werden und der Signalausgang 5 entweder mit Zu- oder Abluft in Verbindung steht. Das dargestellte Ventil kann damit beispielsweise als Vorsteuerventil Verwendung finden.

Das piezoelektrische Biegeelement 7 ist in dem im Innenraum 2 des Gehäuses 1 gelegenen Bereich mit einem Überzug 10 aus zumindest teilweise elastischem Isoliermaterial versehen, welcher auf der gehaltenen Seite 11 des Biegeelementes 7 gleichzeitig auch den Innenraum 2 des Gehäuses 1 nach außen abdichtet. Der Überzug 10 weist dazu auf der gehaltenen Seite 11 des Biegeelementes 7 einen einstückig angeformten, sich im wesentlichen senkrecht zur Längserstreckung des Biegeelementes 7 um dieses erstreckenden Dichtwulst 12 (siehe auch Fig. 2) auf, der im montierten Zustand des Ventils zwischen dem Gehäuse 1 und einem von außen mit dem einseitig gehaltenen Biegeelement 7 samt Überzug 10 einschiebbaren Klemmschuh 13 festgeklemmt ist. Dieser Klemmschuh weist zumindest Teile der elektrischen Kontaktierung des Biegeelementes auf - hier einem einstellbaren Kontaktstift 14 und eine Kontaktfeder 15 - siehe dazu auch Fig. 2.

Der gemäß Darstellung in Fig. 3 von links her in die Öffnung 8 des Gehäuses 1 einschiebbare Klemmschuh 13 weist weiters eine im montierten Zustand des Ventils (siehe Fig. 1) im Gehäuse 1 einrastende, von außen bedarfsweise entriegelbare Rastnase 16 auf, welche mit dem Gehäuse 1 so zusammenwirkt, daß in der eingerasteten Stellung des Klemmschuhs dieser die Kontaktfeder 15 samt Dichtwulst 12 des Überzuges 10 gegen eine Anlagefläche 17 am Gehäuse 1 drückt, sodaß der Innenraum 2 des Gehäuses dadurch sicher abgedichtet wird.

Die Kontaktfeder 15 liegt mit einem Ende 18 an einer Auflage des Klemmschuhs 13 auf und drückt von unten her im Bereich des Kontaktstiftes 14 gegen das Biegeelement 7. Im Bereich des anderen Endes 19 der Kontaktfeder 15 ist in dem in Fig. 1 dargestellten eingeschobenen Zustand des Biegeelementes 7 der Kontakt mit einem zweiten, hier nicht verstellbaren Kontaktstift 20 bzw. dessen innerer Verlängerung 20' hergestellt.

Der Überzug 10 des Biegeelementes 7 ist relativ dünnwandig ausgeführt und vorzugsweise nur im Bereich des Dichtwulstes 12 (bzw. auf nur in Fig. 2 angedeutete Art auch im Bereich des Dichtsitzes 3 bzw. 4) verstärkt. Das verwendete Elastomer ist elektrisch isolierend und in seinen sonstigen Eigenschaften (beispielsweise Chemikalienbeständigkeit und dergleichen) auf die Verwendung abgestellt. Die Länge des Überzuges 10 ist im nicht montierten Zustand geringfügig kleiner als die im montierten Zustand damit überzogene Länge des Biegeelementes, womit der Überzug 10 im montierten Zustand zwischen der Einspannung am Dichtwulst 12 und dem freien Ende 9 leicht gespannt wird und somit sicher auf dem Biegeelement 7 aufliegt. Der Innenraum des Überzuges 10 kann auf hier nicht weiter dargestellte Weise zusätzlich noch beispielsweise über die Oberflächenrauhigkeit des Biegeelementes 7, oder über zusätzliche Kanäle oder dergleichen, durch den Klemmschuh 13 in die Umgebung entlüftet sein, was bei angelegtem Betriebsdruck eine aktive Anpressung des Überzuges 10 an die Oberfläche des Biegeelementes 7 und damit ein besseres Aufliegen ergibt.

Durch die Dünnwandigkeit des Überzuges 10 werden vor allem im Bereich der Dichtsitze 3, 4 negative Effekte durch eine thermische Längenausdehnung bzw. Quellung gering gehalten, wobei zusätzlich die mechanische Bewegungsfreiheit des Biegeelementes 7 nur unwesentlich beeinträchtigt wird. Durch die Elastizität des Überzuges wird gleichzeitig auch die Dichtwirkung an den Dichtsitzen 3, 4 erheblich verbessert bei gleichzeitig geringeren Anforderungen an Geometrie und Oberflächengüte der Dichtsitze.

Das gemäß Fig. 2 zusammen mit der aufgeschobenen Kontaktfeder 15 in den Klemmschuh 13 eingesetzte Biegeelement 7 wird im Klemmschuh 13 an drei Auflagepunkten festgehalten, wobei der vom Kontaktstift 14 gebildete eine Auflagepunkt davon verstellbar ist und gleichzeitig zur Kontaktierung der Mittelelektrode des Biegeelementes 7 dient. Weiters verfügt der Klemmschuh 13 über seitliche Zentrierflächen, die das Biegeelement 7 seitlich fixieren. Zur Anpressung an die Auflagepunkte und zur Kontaktierung der Außenelektroden dient die in Fig. 1 und 2 ersichtliche und bereits angesprochene Kontaktfeder 15. Diese Kontaktfeder 15 umschließt das Biegeelement im Bereich des Dichtwulstes 12 und kontaktiert beidseitig mit federnden Laschen die Oberfläche (siehe Fig. 2). Diese Laschen sind so ausgeformt, daß sich das Biegeelement 7 praktisch nur einschieben läßt und bei einem versuchten Herausziehen aus der Kontaktfeder 15 selbsthemmend gesperrt wird. Auf diese Weise ist erreicht, daß das Biegeelement 7 nach der Montage auf Anschlag in den Klemmschuh 13 in seiner Längsrichtung fixiert ist.

Bei der Montage des Klemmschuhs 13 durch seitliches Einstecken in das Gehäuse 1 (siehe Fig. 3) wird die Kontaktfeder 12 im Gehäuse 1 vorgespannt. Weiters wird dabei der umlaufende Dichtwulst 12 gegen die erwähnt Anlagefläche 17 des Gehäuses 1 gepreßt und die Rastnase 16 in der Öffnung 21 eingerastet. Die Anpressung des Dichtwulstes 12 erzeugt eine Gegenkraft, die die Rastnase 16 des Klemmschuhs 13 in der Darstellung gemäß Fig. 1 in der Gehäuseöffnung 21 links anliegen läßt, womit eine exakte Lage des Biegeelementes selbst im montierten Zustand sichergestellt ist.

Die elektrischen Kontaktierungsstellen des Biegeelementes 7 sind auf der Seite des Klemmschuhs außerhalb des Innenraums 2 des Gehäuses 1 angeordnet und somit vom mit zu steuerndem Medium erfüllten Arbeitsraum des Ventils getrennt, was im Hinblick auf Korrosion an diesen Stellen vorteilhaft ist.

Durch den kompletten Wegfall von Klebe- bzw. Lötstellen oder dergleichen kann das gesamte Ventil jederzeit zerstörungsfrei demontiert werden, wozu im wesentlichen lediglich die Rastnase 16 gemäß Fig. 1 durch Hinunterdrücken entsperrt wird, wonach der Klemmschuh 13 samt Biegeelement 7, Überzug 10, Kontaktstift 14 und Kontaktfeder 15 seitlich wieder aus dem Gehäuse 1 gezogen werden kann (siehe Fig. 3).

Durch die Isolierung und Abdichtung des Biegeelementes 7 relativ zum Gehäuse 1 sowie die beschriebene Art des Auf- und Zusammenbaus des Ventils kann das Gehäuse beispielsweise in Kunststoffspritzgußtechnik hergestellt werden, was die Herstellung des Ventils insgesamt vereinfacht und verbilligt. Auch der Klemmschuh kann beispielsweise aus Kunststoff bestehen und in Spritzgußtechnik hergestellt sein, was einfache und kostengünstige Ventile der beschriebenen Art ermöglicht.

## Patentansprüche

1. Piezoelektrisches Ventil, mit einem im wesentlichen einstückigen Gehäuse (1), wenigstens einem im Innenraum (2) des Gehäuses (1) angeordneten steuerbaren Dichtsitz (3, 4) und einem von einer Seite her abgedichtet ins Gehäuse (2) eingeschobenen und einseitig im Gehäuse (2) gehaltenen piezoelektrischen Biegeelement (7), dessen freie Seite (9) den Dichtsitz (3, 4) entsprechend einer angelegten Steuerspannung verschließt oder freigibt, **dadurch gekennzeichnet, daß** das piezoelektrische Biegeelement (7) zumindest in dem im Innenraum (2) des Gehäuses (1) gelegenen Bereich mit einem Überzug (10) aus zumindest teilweise elastischem Isoliermaterial versehen ist, welcher auf der gehaltenen Seite (11) gleichzeitig auch den Innenraum (2) des Gehäuses (1) nach außen abdichtet.

2. Ventil nach Anspruch 1, **dadurch gekennzeichnet, daß** der Überzug (10) auf der gehaltenen Seite (11) des Biegeelementes (7) einen vorzugsweise einstückig angeformten, sich im wesentlichen senkrecht zur Längserstreckung des Biegeelementes (7) um dieses erstreckenden Dichtwulst (12) aufweist, der im montierten Zustand des Ventils zwischen dem Gehäuse (1) und einem von außen mit dem einseitig gehaltenen Biegeelement (7) samt Überzug (10) einschiebbaren Klemmschuh (13) festgeklemmt ist.

3. Ventil nach Anspruch 2, **dadurch gekennzeichnet, daß** der Klemmschuh (13) zumindest Teile (14, 15) der elektrischen Kontaktierung des Biegeelementes (7) aufweist.

4. Ventil nach Anspruch 2 oder 3, **dadurch gekennzeichnet, daß** am Klemmschuh (13) eine im montierten Zustand des Ventils am Gehäuse (1) einrastende, von außen bedarfsweise entriegelbare Rastnase (16) vorgesehen ist.

5. Ventil nach einem oder mehreren der Ansprüche 1 bis 4, **dadurch gekennzeichnet, daß** der Überzug (10) aus dünnwandigem, vorzugsweise im Bereich des Dichtwulstes (12) und/oder des Dichtsitzes (3, 4) verstärktem, Elastomer besteht.

6. Ventil nach einem oder mehreren der Ansprüche 2 bis 5, **dadurch gekennzeichnet, daß** die Länge des Überzuges (10) im nicht montierten Zustand geringfügig kleiner als die im montierten Zustand damit überzogene Länge des Biegeelementes (7) ist.

7. Ventil nach einem oder mehreren der Ansprüche 2 bis 6, **dadurch gekennzeichnet, daß** der Innenraum des Überzuges (10) über die Oberflächenrauhigkeit des Biegeelementes (7), und/oder über zusätzliche Ausnehmungen, Nuten, Kanäle oder dergleichen des Biegeelementes (7), sowie durch den Klemmschuh (13) in die Umgebung entlüftet ist.

## Claims

1. A piezoelectric valve comprising a substantially one-piece housing (1), at least one controllable sealing seat (3, 4) arranged in the interior (2) of the housing (1), and a piezoelectric bending element (7) which is inserted into the housing (2) from one end in a sealed manner and is fixed in the housing (2) at one end and the free end (9) of which opens or closes the sealing seat (3, 4) in accordance with an applied control voltage, **characterised in that** the piezoelectric bending element (7) is provided with a covering (10) of at least partly resilient insulating material at least in the region situated in the interior (2) of the housing (1), and the covering (10) simultaneously also outwardly seals the interior (2) of the housing (1) at the fixed end (11).

2. A valve according to claim 1, **characterised in that**, at the fixed end (11) of the bending element (7), the covering (10) has a preferably integrally formed sealing bead (12) which extends substantially perpendicularly to the longitudinal extent of the bending element (7) and extends around the bending element (7) and which, in the assembled state of the valve, is clamped between the housing (1) and a clamping shoe (13) which is insertable from outside together with the bending element (7), fixed at one end, and its covering (10).

3. A valve according to claim 2, **characterised in that** the clamping shoe (13) contains at least parts (14, 15) of the electrical contact system of the bending element (7).

4. A valve according to claim 2 or 3, **characterised in that** a detent (16), which engages in the housing (1) in the assembled state of the valve and is releasable from outside if necessary, is provided on the clamping shoe (13).

5. A valve according to one or more of claims 1 to 4, **characterised in that** the covering (10) comprises thin-walled elastomer which is preferably reinforced in the region of the sealing bead (12) and/or the sealing seat (3, 4).

6. A valve according to one or more of claims 2 to 5, **characterised in that** the length of the covering (10) in the non-assembled state is slightly less than the length of the bending element (7) covered with it in the assembled state.

7. A valve according to one or more of claims 2 to 6, **characterised in that** the interior of the covering (10) is deaerated through the clamping shoe (13) and into the environment by means of the surface roughness of the bending element (7) and/or by means of additional recesses, grooves, channels or the like in the bending element (7).

## Revendications

1. Electrovanne à effet piézo-électrique, avec un carter (1) sensiblement en un seul morceau, au moins un siège d'étanchéité (3, 4) actionnable disposé à l'intérieur (2) du carter (1) et un élément de flexion (7) à effet piézo-électrique inséré dans le carter (2) de manière étanche à partir d'un côté et maintenu unilatéralement dans le carter (2) dont le côté libre (9) obture ou libère le siège d'étanchéité (3, 4) en fonction d'une tension de commande appliquée, **caractérisée en ce que** l'élément de flexion (7) à effet piézo-électrique est muni, au moins dans la zone placée à l'intérieur (2) du carter (2), d'un revêtement (10) fait d'une matière isolante au moins partiellement élastique qui étanche en même temps, du côté maintenu (11), également l'intérieur (2) du carter (1) vis-à-vis de l'extérieur.

2. Electrovanne selon la revendication 1, **caractérisée en ce que** le revêtement (10), du côté maintenu (11) de l'élément de flexion (7), comporte un bourrelet d'étanchéité (12) moulé de préférence en un seul morceau, s'étendant sensiblement perpendiculairement à la projection longitudinale de l'élément de flexion (7) autour de celui-ci, qui, à l'état monté de l'électrovanne, est bloqué entre le carter (1) et une cosse de serrage (13) insérable de l'extérieur avec l'élément de flexion (7) maintenu unilatéralement conjointement avec le revêtement (10).

3. Electrovanne selon la revendication 2, **caractérisée en ce que** la cosse de serrage (13) comporte au moins des parties (14, 15) de mise en contact électrique de l'élément de flexion (7).

4. Electrovanne selon la revendication 2 ou 3,
**caractérisée en ce qu'**il est prévu sur la cosse de serrage (13) un taquet à crans d'arrêt (16) qui s'enclenche dans le carter (1) à l'état monté de l'électrovanne et qui peut être désenclenché de l'extérieur en cas de besoin.

5. Electrovanne selon une ou plusieurs des revendications 1 à 4, **caractérisée en ce que** le revêtement (10) est constitué d'un élastomère à paroi mince, de préférence renforcé dans la zone du bourrelet d'étanchéité (12) et/ou du siège d'étanchéité (3, 4).

6. Electrovanne selon une ou plusieurs des revendications 2 à 5, **caractérisée en ce que** la longueur du revêtement (10) à l'état non monté est légèrement inférieure à la longueur de l'élément de flexion (7) revêtue de celui-ci à l'état monté.

7. Electrovanne selon une ou plusieurs des revendications 2 à 6, **caractérisée en ce que** l'intérieur du revêtement (10) est désaéré à l'atmosphère par la rugosité de surface de l'élément de flexion (7), et/ou par des évidements, des rainures et des canaux supplémentaires ou d'autres du même genre, ainsi que par la cosse de serrage (13).
